# EUROPEAN PATENT APPLICATION

(11) **EP 4 851 871 A1**
(43) Date of publication of application: **09.12.2026**
(21) Application number: 25751180.8
(22) Date of filing: 21.01.2025
(51) Int. Cl.: G06N 7/01

(54) **METHOD FOR FUSING OPERATORS IN COMPUTATIONAL GRAPH, AND CORRESPONDING APPARATUS**

(30) Priority: 07.02.2024 CN 202410175944
(71) Applicant: HUAWEI TECHNOLOGIES CO., LTD., Shenzhen, Guangdong 518129 (CN)
(72) Inventor: YANG, Sijia, Shenzhen, Guangdong 518129 (CN); ZHANG, Renwei, Shenzhen, Guangdong 518129 (CN); ZHAO, Jie, Shenzhen, Guangdong 518129 (CN); YU, Fan, Shenzhen, Guangdong 518129 (CN)
(74) Representative: Huawei European IPR
(86) International application number: PCT/CN2025/073556
(87) International publication number: WO 2025/167578

(57) **Abstract**

This application provides a method for operator fusion in a computational graph. The method is applied to an AI compilation process. The method includes: obtaining a target graph, where the target graph includes a plurality of nodes and at least one edge, and the nodes are associated with operators in the computational graph; determining computation types of two nodes connected to a first edge, where computation logic of each of two operators corresponding to the two nodes includes a loop statement; and fusing a loop statement of one operator into a loop statement of the other operator based on a first computation type and a second computation type, to obtain a fused operator obtained after the two operators are fused. In a solution provided in this application, it is unnecessary to compress all loop statements of the operators into one dimension, to recompute indexes for the operators. Instead, the two operators may be fused based on the computation types of the two operators. In this way, a high-performance fused operator may be obtained.

## Description

This application claims priority to Chinese Patent Application No. 202410175944.6, filed with the China National Intellectual Property Administration on February 07, 2024 and entitled "METHOD FOR OPERATOR FUSION IN COMPUTATIONAL GRAPH AND CORRESPONDING APPARATUS", which is incorporated herein by reference in its entirety.

### TECHNICAL FIELD

This application relates to the field of artificial intelligence (artificial intelligence, AI) technologies, and specifically, to a method for operator fusion in a computational graph and a corresponding apparatus.

### BACKGROUND

In an AI compilation optimization framework, a computational graph is used to represent a network structure. A computational graph is a computational function expressed by a directed graph with operators (operators, OPs) as nodes. The computational function executes the operators in the directed graph on input tensors (tensors) in sequence to obtain final output tensors. An operator is essentially a computational function as well. Some operators may further include computation logic of a plurality of simple operators. These relatively complex operators may be understood as fused operators. During compilation, a producer operator and a consumer operator that have data dependency on the computational graph may be fused into a fused operator, to improve memory access locality of an intermediate tensor in the computation process. To be specific, instead of first migrating intermediate data produced by the producer operator from a global memory to the consumer operator, the intermediate data is directly transferred to a next compute unit within a fused operator to complete computation, thereby resolving a memory wall problem. This fusion technology is also collectively referred to as buffer (buffer) fusion.

Buffer fusion has been a mainstream technology of operator fusion for a long time. However, in the era of large models, operators have become increasingly complex, and statements in many operators are loop statements, which results in that operator fusion becomes increasingly difficult. Currently, an InlineFusion technology is primarily used to fuse operators that contain loop statements. All loop statements of the operators are compressed into one dimension. Then, an index of an input statement is computed by using a dependency analysis technology, and the input statement and an output statement are fused to implement operator fusion.

Many scalar computations are introduced in an index computation process, and the scalar computations occupy a large quantity of hardware resources. In addition, code of a fused operator obtained in this manner is compressed, resulting in poor performance of the fused operator.

### SUMMARY

This application provides a method for operator fusion in a computational graph, to improve performance of a fused operator. This application further provides a corresponding apparatus, a computer-readable storage medium, a computer program product, and the like.

A first aspect of this application provides a method for operator fusion in a computational graph. The method includes: obtaining a target graph, where the target graph includes a plurality of nodes and at least one edge, each edge is used to connect two nodes that have a dependency relationship in the plurality of nodes, and the nodes are associated with operators in the computational graph; determining a first computation type and a second computation type, where the first computation type is a computation type of a first node connected to a first edge, the second computation type is a computation type of a second node connected to the first edge, the first edge is included in the at least one edge, the first node corresponds to a first operator in the computational graph, the second node corresponds to a second operator in the computational graph, and computation logic of each of the first operator and the second operator includes a loop statement; and fusing a loop statement of the first operator into a loop statement of the second operator based on the first computation type and the second computation type, to obtain a fused operator obtained after the first operator and the second operator are fused.

In this application, the computational graph includes operators and an edge, and the edge is used to connect two operators that have a dependency relationship. For example, if an output of the first operator is an input of the second operator, the first operator and the second operator have a dependency relationship. An operator may be understood as a computational function. The computational function may be a relatively simple computational function, for example, performing an addition operation or a multiplication operation, or may be a relatively complex computational function. Computational functions of some operators further include loop statements. For an operator including a loop statement, when a computational function of the operator is executed, loop iteration is performed for a plurality of times on a part of the loop statement until reaching a loop termination condition.

In this application, the target graph may be a computational graph, or may be a dependency graph obtained by performing relationship dependency analysis based on the computational graph. If the target graph is a computational graph, the nodes are operators, and the edge is an edge connecting two operators that have a dependency relationship. If the target graph is a dependency graph, nodes in the dependency graph correspond to the operators in the computational graph, and an edge corresponds to the edge connecting the operators in the computational graph.

In this application, there may be a plurality of computation types, for example, an elemwise operation, a broadcast (Broadcast) operation, a reshape (Reshape) operation, a transpose (Transpose) operation, and a reduce operation.

In this application, the loop statements of the two operators may be directly fused, or may be fused after loop transformation.

In the first aspect, for two operators that have a dependency relationship, a loop statement of one of the two operators may be fused into a loop fused statement of the other operator based on computation types of the two operators. It is unnecessary to compress all loop statements of the operators into one dimension, to recompute indexes for the operators. Instead, the two operators may be fused based on the computation types of the two operators. In this way, a high-performance fused operator may be obtained.

In a possible implementation, if it is determined, by looking up a combination table based on the first computation type and the second computation type, that a loop iteration space of the first operator overlaps with a loop iteration space of the second operator, the loop statement of the first operator may be directly fused into the loop statement of the second operator.

In this possible implementation, the first computation type and the second computation type may be a same computation type, or may be different computation types. A loop statement in an operator has a loop iteration space. The loop iteration space of the first operator may be the same as or different from the loop iteration space of the second operator. When the loop iteration spaces are the same, the loop statements may be directly fused.

A loop iteration space may be understood as a two-dimensional space, which includes each iteration instance of a loop statement in a loop. If each iteration instance is represented by a point, points of all iteration instances in the entire loop may be constructed as a rectangle. The rectangle may be considered as a polyhedron (Polyhedron) in a two-dimensional space, and this space is referred to as a loop iteration space of computation. If the iteration space of the first operator is the same as that of the second operator, the loop statement of the first operator may be directly fused into the loop statement of the second operator. In this way, code performance of the fused operator may be improved, and efficiency of operator fusion may be improved.

In a possible implementation, the foregoing step of fusing the loop statement of the first operator into the loop statement of the second operator based on the first computation type and the second computation type includes: determining at least one loop transformation strategy based on the first computation type and the second computation type; processing the loop statement of the first operator based on the at least one loop transformation strategy, to transform the loop iteration space of the first operator to overlap with the loop iteration space of the second operator; and fusing the loop statement of the first operator into the loop statement of the second operator.

In this possible implementation, if the at least one loop transformation strategy is determined based on the first computation type and the second computation type, it indicates that corresponding loop processing needs to be performed on the loop statement of the first operator, so as to transform the loop iteration space of the first operator to overlap with the loop iteration space of the second operator, and then fuse the loop statements. It can be learned that, in a solution of this application, the computation types of the two operators may be used to assist determining of a loop transformation strategy of the first operator, so that the two operators can be fused with high performance.

In a possible implementation, the at least one loop transformation strategy is obtained by looking up a combination table based on the first computation type and the second computation type, and the combination table includes a correspondence between a combination of the first computation type and the second computation type and the at least one loop transformation strategy.

In a possible implementation, the combination table is:

| Computation types of the first operator and the second operator | Elemwise | Broadcast | Reshape | Transpose | Reduce | Shuffle |
|---|---|---|---|---|---|---|
| Elemwise | [] | [Ⓡ] | **[Ⓡ** \| Ⓢ \| Ⓒ] | [Ⓟ] | [Ⓟ] | [Ⓑ] |
| Broadcast | [] | [Ⓡ] | [Ⓡ \| Ⓢ \| Ⓒ | [Ⓟ] | [Ⓟ] | [Ⓑ] |
| Reshape | [] | [] | | [Ⓟ] | [] | [Ⓑ] |
| Transpose | [] | [Ⓡ] | [Ⓒ \| Ⓢ] | | ^{®} | [Ⓑ] |
| Reduce | [Ⓡ] | [Ⓡ] | [Ⓒ I Ⓢ] | [Ⓟ \| Ⓡ] | [Ⓡ] | [Ⓑ] |
| Shuffle | [Ⓑ] | [Ⓑ] | [Ⓑ] | [Ⓑ] | [Ⓑ] | [Ⓑ] |

In the foregoing combination table, a 1st row represents six computation types of the first operator, a 1st column represents six computation types of the second operator, Ⓡ represents loop replication, Ⓟ represents loop interchange, Ⓢ represents loop segmentation, Ⓒ represents loop compression, Ⓑ represents loop backtracking, [] is an empty set and represents that the loop iteration spaces of the first operator and the second operator overlap, and a blank intersection cell represents that the computation type of the first operator and the computation type of the second operator are not Reshape or Transpose at the same time.

In this possible implementation, by looking up the table, whether the loop iteration spaces of the first operator and the second operator are consistent and a loop transformation strategy that is used when the loop iteration spaces are inconsistent may be quickly determined based on the first computation type and the second computation type. In this way, a speed of operator fusion can be improved.

In a possible implementation, the method further includes: determining a computation type of the fused operator based on the first computation type and the second computation type.

In this possible implementation, the computation type of the fused operator is determined based on the first computation type of the first operator and the second computation type of the second operator, to facilitate further optimization of the fused operator.

In a possible implementation, the computation type of the fused operator is obtained by looking up a computation type derivation table based on the first computation type and the second computation type, and the computation type derivation table includes a correspondence between the combination of the first computation type and the second computation type and the computation type of the fused operator.

In a possible implementation, the computation type derivation table is:

| Computation types of the first operator and the second operator | Elemwise | Broadcast | Reshape | Transpose | Reduce | Shuffle |
|---|---|---|---|---|---|---|
| Elemwise | Elemwise | Broadcast | [Broadcast I Reshape \| Elemwise] | Transpose | Reduce | Shuffle |
| Broadcast | Broadcast | Broadcast | [Broadcast I Reshape \| Elemwise] | Transpose | Reduce | Shuffle |
| Reshape | Reshape | Reshape | Reshape | Shuffle | Reduce | Shuffle |
| Transpose | Transpose | Transpose | Shuffle | Transpose | Reduce | Shuffle |
| Reduce | Reduce | Reduce | Reduce | Reduce | Reduce | Shuffle |
| Shuffle | Shuffle | Shuffle | [Shuffle I Transpose] | [Shuffle I Reshape] | Reduce | [Shuffle \| Reshape \| Transpose \| Elemwise] |

In the foregoing computation type derivation table, a 1st row represents the six computation types of the first operator, a 1st column represents the six computation types of the second operator, and a computation type at an intersection cell is the computation type of the fused operator.

In this possible implementation, the computation type of the fused operator may be quickly determined based on the first computation type and the second computation type by looking up the table. This helps further optimize the fused operator.

In a possible implementation, the computational graph is a dynamic computational graph or a static computational graph, a shape of a tensor in the dynamic computational graph is described by using a variable, and a shape of a tensor in the static computational graph is described by using a constant.

In this possible implementation, a high-performance fused operator may be obtained by performing loop fusion based on both the static computational graph and the dynamic computational graph.

In a possible implementation, the computational graph is a dynamic computational graph, and the method further includes: performing symbol derivation on the computational graph, to determine a relationship between a first variable and a second variable in the computational graph, where the relationship between the first variable and the second variable indicates a loop fusion strategy or indicates a relationship between input data and output data of an operator of a different computation type, the first variable is a variable used to describe a shape of a first tensor, the second variable is a variable used to describe a shape of a second tensor, and the first tensor and the second tensor are different tensors in the computational graph.

In this possible implementation, the relationship between the first variable and the second variable indicates the loop fusion strategy or indicates the relationship between the input data and the output data of the operator of the different computation type. In this way, support for a dynamic shape is implemented, along with loop fusion for implicit broadcast.

In a possible implementation, when the first node is used as a source node, and there are a plurality of corresponding target nodes, the method further includes: determining the second node with the highest priority in the plurality of target nodes; and performing dependency inversion on the source node and a target node other than the second node in the plurality of target nodes, so that the first node becomes a target node in a dependency relationship with the target node other than the second node.

In this possible implementation, when there are a plurality of target nodes, a unique target node may be determined for the source node through dependency inversion, thereby implementing efficient fusion of operators.

In a possible implementation, the method further includes: determining, based on a loop transformation strategy, a loop control parameter corresponding to the loop transformation strategy, where the loop control parameter is used to control processing of the loop statement of the first operator.

In this possible implementation, corresponding loop input parameters may be determined in the loop transformation strategy. For example, loop replication is used as an example. The loop input parameters may include a quantity of replicated loops, an insertion position of a loop, an upper bound (a start position), a lower bound (an end position), and a step of a replicated loop. In this way, accuracy of loop processing can be improved by controlling the loop input parameters.

In a possible implementation, the method further includes: updating information about the second operator to information about the fused operator, where the information about the fused operator includes the computation type of the fused operator.

In this possible implementation, after the first operator is fused with the second operator, the information about the second operator may be updated, and the computation type of the second operator may be updated to the computation type of the fused operator. This facilitates next loop fusion.

In a possible implementation, when there are a plurality of edges, the method further includes: performing loop fusion on two nodes associated with a second edge.

In this possible implementation, for understanding of a process of performing loop fusion on the two nodes associated with the second edge, refer to the foregoing process of loop fusion of the first operator and the second operator. In this application, a plurality of rounds of loop fusion may be performed on the computational graph. In this way, the computational graph can be better optimized.

A second aspect of this application provides a computer apparatus, including:
an obtaining unit, configured to obtain a target graph, where the target graph includes a plurality of nodes and at least one edge, each edge is used to connect two nodes that have a dependency relationship in the plurality of nodes, and the nodes are associated with operators in the computational graph;
a first processing unit, configured to determine a first computation type and a second computation type, where the first computation type is a computation type of a first node connected to a first edge, the second computation type is a computation type of a second node connected to the first edge, the first edge is included in the at least one edge, the first node corresponds to a first operator in the computational graph, the second node corresponds to a second operator in the computational graph, and computation logic of each of the first operator and the second operator includes a loop statement; and
a second processing unit, configured to fuse a loop statement of the first operator into a loop statement of the second operator based on the first computation type and the second computation type, to obtain a fused operator obtained after the first operator and the second operator are fused.

In a possible implementation, if it is determined, by looking up a combination table based on the first computation type and the second computation type, that a loop iteration space of the first operator overlaps with a loop iteration space of the second operator, the loop statement of the first operator may be directly fused into the loop statement of the second operator.

In a possible implementation, the second processing unit is specifically configured to: determine at least one loop transformation strategy based on the first computation type and the second computation type; process the loop statement of the first operator based on the at least one loop transformation strategy, to transform the loop iteration space of the first operator to overlap with the loop iteration space of the second operator; and fuse the loop statement of the first operator into the loop statement of the second operator.

In a possible implementation, the at least one loop transformation strategy is obtained by looking up a combination table based on the first computation type and the second computation type, and the combination table includes a correspondence between a combination of the first computation type and the second computation type and the at least one loop transformation strategy.

In a possible implementation, the combination table is:

| Computation types of the first operator and the second operator | Elemwise | Broadcast | Reshape | Transpose | Reduce | Shuffle |
|---|---|---|---|---|---|---|
| Elemwise | [] | [Ⓡ] | [Ⓡ \| Ⓢ \| Ⓒ] | [Ⓟ] | [Ⓟ] | [Ⓑ] |
| Broadcast | [] | [Ⓡ] | [Ⓡ \| Ⓢ \| | [Ⓟ] | [Ⓟ] | [Ⓑ] |
| Reshape | [] | [] | | [Ⓟ] | [] | [Ⓑ] |
| Transpose | [] | [Ⓡ] | [Ⓒ \| Ⓢ] | | [Ⓟ] | [Ⓑ] |
| Reduce | [Ⓡ] | [Ⓡ] | [Ⓒ \| Ⓢ] | Ⓡ] [Ⓟ \| Ⓡ] | [Ⓡ] | [Ⓑ] |
| Shuffle | [Ⓑ] | [Ⓑ] | [Ⓑ] | [Ⓑ] | [Ⓑ] | [Ⓑ] |

In the foregoing combination table, a 1st row represents six computation types of the first operator, a 1st column represents six computation types of the second operator, Ⓡ represents loop replication, Ⓟ represents loop interchange, Ⓢ represents loop segmentation, Ⓒ represents loop compression, Ⓑ represents loop backtracking, [] is an empty set and represents that the loop iteration spaces of the first operator and the second operator overlap, and a blank intersection cell represents that the computation type of the first operator and the computation type of the second operator are not Reshape or Transpose at the same time.

In a possible implementation, the second processing unit is further configured to determine a computation type of the fused operator based on the first computation type and the second computation type.

In a possible implementation, the computation type of the fused operator is obtained by looking up a computation type derivation table based on the first computation type and the second computation type, and the computation type derivation table includes a correspondence between the combination of the first computation type and the second computation type and the computation type of the fused operator.

In a possible implementation, the computation type derivation table is:

| Computation types of the first operator and the second operator | Elemwise | Broadcast | Reshape | Transpose | Reduce | Shuffle |
|---|---|---|---|---|---|---|
| Elemwise | Elemwise | Broadcast | [Broadcast \| Reshape \| Elemwise] | Transpose | Reduce | Shuffle |
| Broadcast | Broadcast | Broadcast | [Broadcast \| Reshape \| Elemwise] | Transpose | Reduce | Shuffle |
| Reshape | Reshape | Reshape | Reshape | Shuffle | Reduce | Shuffle |
| Transpose | Transpose | Transpose | Shuffle | Transpose | Reduce | Shuffle |
| Reduce | Reduce | Reduce | Reduce | Reduce | Reduce | Shuffle |
| Shuffle | Shuffle | Shuffle | [Shuffle \| Transpose] | [Shuffle \| Reshape] | Reduce | [Shuffle \| Reshape \| Transpose \| Elemwise] |

In the foregoing computation type derivation table, a 1st row represents the six computation types of the first operator, a 1st column represents the six computation types of the second operator, and a computation type at an intersection cell is the computation type of the fused operator.

In a possible implementation, the computational graph is a dynamic computational graph or a static computational graph, a shape of a tensor in the dynamic computational graph is described by using a variable, and a shape of a tensor in the static computational graph is described by using a constant.

In a possible implementation, the first processing unit is further configured to perform symbol derivation on the dynamic computational graph, to determine a relationship between a first variable and a second variable in the dynamic computational graph, where the relationship between the first variable and the second variable indicates a loop fusion strategy or indicates a relationship between input data and output data of an operator of a different computation type, the first variable is a variable used to describe a shape of a first tensor, the second variable is a variable used to describe a shape of a second tensor, and the first tensor and the second tensor are different tensors in the dynamic computational graph.

In a possible implementation, when the first node is used as a source node, and there are a plurality of corresponding target nodes, the first processing unit is further configured to: determine the second node with the highest priority in the plurality of target nodes; and perform dependency inversion on the source node and a target node other than the second node in the plurality of target nodes, so that the first node becomes a target node in a dependency relationship with the target node other than the second node.

In a possible implementation, the second processing unit is further configured to: determine, based on a loop transformation strategy, a loop control parameter corresponding to the loop transformation strategy, where the loop control parameter is used to control processing of the loop statement of the first operator.

In a possible implementation, the second processing unit is further configured to update information about the second operator to information about the fused operator, where the information about the fused operator includes the computation type of the fused operator.

In a possible implementation, the second processing unit is further configured to: when there are a plurality of edges, perform loop fusion on two nodes associated with a second edge.

In a possible implementation, the target graph is the computational graph, the first node is the first operator, the second node is the second operator, and the first edge is an edge used to connect the first operator and the second operator.

In a possible implementation, the target graph is a dependency graph obtained by performing dependency relationship analysis on the computational graph.

A third aspect of this application provides a computer device. The computer device includes a processor and a computer-readable storage medium that stores a computer program. The processor is coupled to the computer-readable storage medium. When the computer program is executed by the processor, the method according to any one of the first aspect or the possible implementations of the first aspect is implemented.

A fourth aspect of this application provides a computer-readable storage medium storing one or more computer-executable instructions. When the computer-executable instructions are executed by a processor, the processor performs the method according to any one of the first aspect or the possible implementations of the first aspect.

A fifth aspect of this application provides a computer program product storing one or more computer-executable instructions. When the computer-executable instructions are executed by a processor, the processor performs the method according to any one of the first aspect or the possible implementations of the first aspect.

A sixth aspect of this application provides a chip system. The chip system includes a processor, configured to support a computer device in implementing functions in the method according to any one of the first aspect or the possible implementations of the first aspect. In a possible design, the chip system may further include a memory. The memory is used to store program instructions and data that are necessary for a training node. The chip system may include a chip, or may include a chip and another discrete component.

For technical effects brought by the second aspect or any one of the possible implementations of the second aspect to the sixth aspect, refer to technical effects brought by the first aspect or different possible implementations of the first aspect. Details are not described herein again.

### BRIEF DESCRIPTION OF DRAWINGS

FIG. 1A is a diagram of an instance of a computational graph according to an embodiment of this application;
FIG. 1B is a diagram of an instance of a loop iteration space according to an embodiment of this application;
FIG. 2A is a diagram of a structure of a cloud system according to an embodiment of this application;
FIG. 2B is a diagram of another structure of a cloud system according to an embodiment of this application;
FIG. 2C is a diagram of a structure of a data center according to an embodiment of this application;
FIG. 3 is a diagram of a structure of an AI compilation apparatus according to an embodiment of this application;
FIG. 4 is a diagram of an AI architecture according to an embodiment of this application;
FIG. 5 is a diagram of an embodiment of a method for operator fusion in a computational graph according to an embodiment of this application;
FIG. 6 is a diagram of another embodiment of a method for operator fusion in a computational graph according to an embodiment of this application;
FIG. 7 is a diagram of an instance of a computational graph according to an embodiment of this application;
FIG. 8 is a diagram of another instance of a computational graph according to an embodiment of this application; and
FIG. 9 is a diagram of a structure of a computer apparatus according to an embodiment of this application.

### DESCRIPTION OF EMBODIMENTS

The following describes embodiments of this application with reference to the accompanying drawings. It is clear that the described embodiments are merely some rather than all of embodiments of this application. A person of ordinary skill in the art may know that with development of technologies and emergence of new scenarios, the technical solution provided in embodiments of this application is also applicable to resolving similar technical problems.

In the specification, claims, and accompanying drawings of this application, the terms "first", "second", and so on are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein. In addition, the terms "include" and "have" and any other variants are intended to cover non-exclusive inclusion. For example, a process, method, system, product, or device that includes a list of steps or units is not necessarily limited to those expressly listed steps or units, but may include other steps or units not expressly listed or inherent to such a process, method, product, or device.

Embodiments of this application provide a method for operator fusion in a computational graph, to improve performance of a fused operator. This application further provides a corresponding apparatus, a computer-readable storage medium, a computer program product, and the like. Details are separately described in the following.

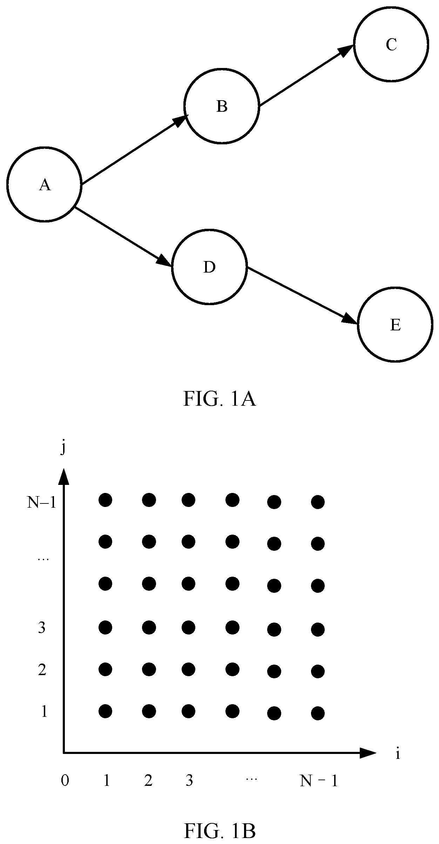

For ease of understanding, the following briefly describes technical terms in embodiments of this application:
1. Artificial intelligence (artificial intelligence, AI): AI is a theory, a method, a technology, and an application system in which human intelligence is simulated, expanded, and extended via a digital computer or a machine controlled by a digital computer, to perceive an environment, obtain knowledge, and achieve an optimal result by using the knowledge. In other words, AI is a branch of computer science, and is intended to understand essence of intelligence and produce a new intelligent machine that can react in a manner similar to human intelligence. AI is to study design principles and implementation methods of various intelligent machines, so that the machines have functions of perception, inference, and decision-making. Research in the field of artificial intelligence includes robotics, natural language processing, computer vision, decision-making and inference, human-machine interaction, recommendation and search, AI basic theories, and the like.
2. AI framework: A core function of an AI framework is to provide a developer with an interface for constructing a neural network (mathematical operation), automatically perform back-propagation on neural network training, and approximately solve for an optimal value, to obtain a neural network model (approximating function) for resolving classification, regression, and fitting problems, thereby implementing application scenarios like target classification and speech recognition. Mainstream AI frameworks in the industry include Mindspore, TensorFlow, PyTorch, and the like. The AI framework basically uses a computational graph to express a network structure. The AI framework is usually designed by using a multi-level intermediate representation (intermediate representation, IR) to mainly meet both a usability requirement and a high performance requirement. For example, to facilitate use for a developer, a high-level (High-level) IR is typically used at a front end (graph layer) of the AI framework, such an IR abstracts and encapsulates tensor (Tensor) computations as much as possible, and the developer only needs to focus on a logical model and operator. However, when operator performance is optimized at a back end (operator layer) of the AI framework, a low-level (Low-level) IR is typically used, and such an IR enables an operator layer compiler to complete fine-grained optimization based on different hardware features.
3. Computational graph: A computational graph is a computational function expressed by a directed graph with operators (Operators) as nodes. In an AI framework, this computational function sequentially invokes and executes an operator node in the directed graph on an input tensor (Tensor), to obtain a final output tensor. An operator is essentially a computational function, for example, Add and Sigmoid, which are referred to as operators. However, a complex operator like Sigmoid, in its mathematical implementation, includes basic operators such as Neg, Exp, Add, and Reciprocal. Therefore, it can be learned that a computational graph and an operator are essentially consistent in computation. An operator is a packaged computational graph, and a computational graph is an unpacked operator. Therefore, theoretically, a small-scale "basic operator" set may be first defined, and then any existing operator is equivalently expressed by using one or more basic operator sets, to further express any existing computational graph. Such a computational graph including a plurality of basic operators is a "fused operator". Alternatively, it is understood as that a fused sub-graph/fused operator refers to all sub-graphs including different basic operators, is a sub-graph from a perspective of a graph layer, and is a fused operator from a perspective of an operator layer. For a structure of the computational graph, refer to FIG. 1A for understanding. As shown in FIG. 1A, the computational graph includes an operator A, an operator B, an operator C, an operator D, and an operator E. There is a dependency relationship between the operator A and the operator B, and an output of the operator A is an input of the operator B. There is a dependency relationship between the operator B and the operator C, and an output of operator B is an input of operator C. Similarly, there is a dependency relationship between the operator A and the operator D, and the output of the operator A is an input of the operator D. There is a dependency relationship between the operator D and the operator E, and an output of operator D is an input of operator E.
4. Graph layer compiler: Mainstream graph compilers include MindCompiler of Mindspore, XLA of TensorFlow, Relay of TVM, and the like. These compilers focus on non-loop related optimizations. In addition to optimizations such as constant folding, algebraic simplification, common subexpression, and the like in a traditional compiler, optimizations such as layout conversion and operator fusion are also completed. By analyzing and optimizing logic of existing network computational graph, original computation logic is decomposed, reorganized, fused, and the like, to reduce overheads of operator execution gaps and improve computing resource utilization of a device, thereby optimizing overall execution time of a network.
5. Operator layer compiler: Mainstream operator compilers include an auto kernel generator (auto kernel generator, AKG) of MindSpore, BaldeDISC, TVM, and the like. For a low-level IR, there are mainly scheduling-related optimizations such as loop transformation and loop splitting, as well as back-end pass optimizations such as hardware intrinsic mapping and memory allocation.
6. Operator fusion: Operator fusion is the most important single-card performance optimization means for an AI network. Operator fusion primarily fuses a producer operator and a consumer operator that have data dependency on a computational graph into a fused operator, to improve memory access locality of intermediate tensor data. To be specific, instead of first migrating intermediate data produced by the producer operator from a global memory to the consumer operator, the intermediate data is directly transferred to a next compute unit within a fused operator to complete computation, thereby resolving a memory wall problem. This fusion technology is also collectively referred to as buffer (Buffer) fusion.
7. Large model: A large model is also referred to as a large language model (large language model, LLM). A language model (LM) is a model for modeling a natural language. Typically, given a segment of natural language x_{1~t}, the LM predetermines a probability of a next word, based on the foregoing description that is, models distribution P(xₜ₊₁|x_{1~t}). A plurality of types of machine learning models may be used to model a natural language to form so-called language models, such as a hidden Markov chain, a Naive Bayesian model, and a neural network. After entering an era of deep learning, neural network models gradually become the mainstream. Particularly, after a transformer architecture is proposed, neural networks of this paradigm gradually become the mainstream of LMs. The first L in the LLM indicates Large. Compared with a traditional LM, the LLM has a large parameter scale, which can reach tens of billions, even hundreds of billions, or trillions. Currently, most LLMs use transformers as basic architectures and use massive text data for pre-training, providing powerful language modeling capabilities.
8. Polyhedron model: The optimizations of operators in the foregoing AKG may be implemented based on processing of a polyhedron model. The polyhedron model is an abstract mathematical model gradually formed and developed based on linear algebra, linear programming, set theory, mathematical logic, and optimization theory. The polyhedron model describes a program by using iteration spaces, statement instances, access relationships, dependency relationships, and scheduling, and implements, based on scheduling transformation, a series of optimizations related to parallelism and locality. During optimization, operators in a computational graph may be translated into poly statements used in the polyhedron model, and then polyhedron abstraction modeling is performed. Taking full account of underlying architectural features, a polyhedron scheduling optimization module is used to implement tensor-level loop transformation, then an optimized loop is mapped to a task in a hardware-related optimization module, and finally code is generated for target hardware.
9. Poly statement (statement for short): A poly statement is a basic unit of scheduling a polyhedron model and is represented by S_index, for example, S_0 and S_1. The following describes the foregoing examples in detail. An example of a loop nest is as follows:

   ```
     for (int i=1; i<N; i++)
          for (int j=1; j<N; j++)
               A[i, j]=f(A[i-1][j], A[i][j-1]);
```

   where N is a constant. A statement in the loop nest updates data at a position of A[i][j] by referencing data stored at A[i-1][j] and A[i][j-1]. If each iteration instance of a statement in a loop is abstracted as a point in space, a two-dimensional space based on (i, j) may be constructed. As shown in FIG. 1B, each black point represents an iteration instance of a statement written into A[i][j], so that a rectangle formed by all black points may be constructed. The rectangle may be considered as a polyhedron (Polyhedron) in a two-dimensional space, and this space is referred to as an iteration space of the computation. In addition, the polyhedron in the two-dimensional space may be represented by using a set from algebra, that is, {[i, j]: 1<=i<=N-1 and 1<=j<=N-1}, where [i, j] is a 2-tuple, and an inequality after ":" represents an interval of the set. If the 2-tuple is denoted as S to represent a statement, the polyhedron of the statement may be represented as {S[i, j]: 1<=i<=N-1 and 1<=j<=N-1}.
10. Computation operation: There are a plurality of types of computation operations or operations of a plurality of computation types in a process of operator fusion or operator optimization, where the operations may include a reshape (reshape) operation, a transpose (transpose) operation, an elemwise operation, a broadcast (broadcast) operation, a reduce operation, and the like.
11. Reshape operation: In MATLAB, a reshape function is a function used to transform a specified matrix into a matrix with specific dimensions. A quantity of elements in the matrix remains unchanged. The function can readjust quantities of rows, columns, and dimensions of the matrix. Function syntax B=reshape(A, size) indicates that an n-dimensional array that is the same as an element A is returned, but a vector size (size) determines a quantity of dimensions of a reconstructed array. The reshape operation may be understood as adjusting a shape of a tensor, but an amount and a relative position of data remain unchanged. For example, a shape of a tensor [0.2, 0.1] with one row and two columns can be represented as (1, 2), where data are 0.2 and 0.1. After being reshaped to (2, 1), the tensor becomes a tensor with two rows and one column:
   [0.2,
   0.1].
12. Transpose operation: A transpose operation may be understood as an operation of exchanging rows and columns of a matrix or an array, so that a data arrangement manner may be changed without changing data itself, to meet a specific computation or analysis requirement.
13. Elemwise operation: An Elemet-Wise operator refers to performing an element-by-element operation on an input tensor, for example, determining whether each value of the input tensor is greater than 0. If the value is greater than 0, an output is an input. Otherwise, the output is 0.
14. Reduce operation: A reduce operation is a common operation in functional programming, and is used to perform iterative computation on a data set and return a single result. This operation gradually standardizes the set as a single value by applying a binary function to an element in the data set.
15. Broadcast: Broadcast includes automatic broadcast and implicit broadcast. When an elemwise operation (for example, addition) may be performed on a tensor A whose shape (shape) is (1024, 1) and a tensor B whose shape is (1024, 1024) through the automatic broadcast, an AI compilation framework automatically extends the shape of the tensor A to be consistent with that of the tensor B, and then performs an element-by-element operation. The implicit broadcast is an operation currently supported by default by an AI framework, and refers to a feature of allowing two tensors whose shapes that are not identical but compatible to perform an elemwise operation through automatic shape extension. For example, when the tensor A whose shape is (1024, ?) and the tensor B whose shape is (1024, 1024) perform an elemwise operation (for example, addition), because "?" represents a dynamic shape, the shape of the tensor A can be determined only at runtime. In this case, there are two possible cases for the shape of the tensor A: (1024, 1) or (1024, 1024). The two cases respectively correspond to that the automatic broadcast is needed and that the automatic broadcast is not needed. Therefore, this scenario with a dynamic shape is referred to as implicit broadcast. There are a dynamic shape and a fixed shape in a broadcast scenario. The dynamic shape and the fixed shape are a pair of concepts. The fixed shape indicates that a shape size is specified during compilation, and does not need to be specified during running. During development of an operator with a fixed shape, source code of an operator may support a plurality of fixed shapes. However, actual values of the shapes need to be specified during compilation. The dynamic shape indicates that a shape size is not specified during compilation and an actual shape size is input during running. A binary file obtained after operator compilation supports any shape or one or more shape ranges.
16. InlineFusion technology: An InlineFusion technology is a compiler optimization technology that is used to inline function calls to call positions in a compilation phase to reduce overheads of the function calls and improve program performance. In the present invention, an operator fusion technology completed by BladeDISC based on the InlineFusion technology is used. A specific method is to compress all loops into one dimension, and recompute indexes for different operators. For example: For two loop nests before inline fusion, out2 depends on out1

   ```
     for i
         for j
              out1[i, j]=in1[i, j]
     for i
         for j
              out2[i, j]=out1[i, j]
```

   A computation process of out1 is inlined to a computation process of out2 through inline fusion. An index of out1 needs to be recomputed based on a loop nest where out2 is located:

   ```
     for i
          for j
               linear_out1_index=i*j
               delinear_out1_i=linear_out1_index/j
               delinear_out1_j=linear_out1_index%j
               out1[delinear_out1_i, delinear_out1_j]=in1[delinear_out1_i, delinear_out1_j]
               out2[i, j]=out1[i, j].
```
17. Program dependency analysis technology: Program dependency analysis is a static analysis technology used to determine dependency relationships between components in a computer program. The program dependency analysis technology understands a structure and a behavior of a program by analyzing reference and call relationships between variables, functions, modules, and classes in code, as well as transfer of data flows and control flows.
18. Loop fusion: Loop fusion is a loop transformation technology that fuses a plurality of loop nests together to form a unified iteration space, thereby facilitating optimization of a compiler to implement other optimization.
19. Loop interchange: Loop interchange is a loop transformation technology that exchanges nesting sequences of two loops in perfectly nested loops.
20. Loop segmentation: Loop segmentation is a loop transformation technology that divides an iteration space of a loop into a plurality of subsets and executes each subset as a scheduling unit.
21. Loop compression: Loop compression is also referred to as loop linearization, and is a loop transformation technology that compresses a plurality of layers of loop nests into a single-layer loop.

The method for operator fusion in a computational graph according to embodiments of this application may be applied to a model training phase, or may be applied to a model inference phase. Regardless of the model training phase or the model inference phase, a process of operator fusion may be performed on a cloud system, an independent server, or a terminal device. The following uses an example in which the process of operator fusion is performed on the cloud system for description.

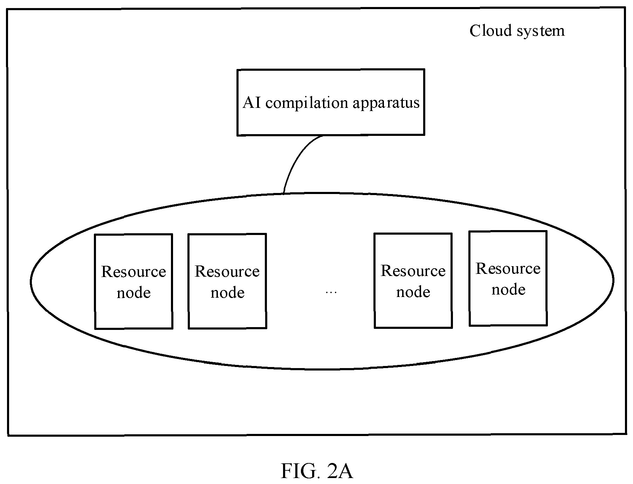

FIG. 2A is a diagram of a structure of a cloud system according to an embodiment of this application.

As shown in FIG. 2A, the cloud system includes an AI compilation apparatus and a plurality of resource nodes. The AI compilation apparatus may communicate with the plurality of resource nodes. The AI compilation apparatus may perform compilation optimization on a computational graph, for example, perform fusion on operators in the computational graph, to obtain a fused operator. Then, the AI compilation apparatus may send an optimized computational graph to the one or more resource nodes for execution.

The AI compilation apparatus in FIG. 2A may be an independent device, or may be integrated into a control platform of the cloud system, or may be integrated into a resource node.

A function of the AI compilation apparatus may be implemented through software or hardware.

The AI compilation apparatus is used as an example of a software functional unit, and the AI compilation apparatus may include code running on a computing instance. The computing instance may include at least one of a physical host (computing device), a virtual machine, and a container. Further, there may be one or more computing instances. For example, the AI compilation apparatus may include code running on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed on a same virtual private cloud (virtual private cloud, VPC), or may be distributed on a plurality of VPCs. Generally, one VPC is set in one region. A communication gateway needs to be set in each VPC for communication between two VPCs in a same region or between VPCs in different regions. Interconnection between VPCs is implemented through the communication gateway.

The AI compilation apparatus is used as an example of a hardware functional unit, and the AI compilation apparatus may include at least one computing device, for example, a server. Alternatively, the AI compilation apparatus may be a device implemented by using an application-specific integrated circuit (application-specific integrated circuit, ASIC), a device implemented by using a programmable logic device (programmable logic device, PLD), or the like. The PLD may be implemented by using a complex programmable logic device (complex programmable logic device, CPLD), a field-programmable gate array (field-programmable gate array, FPGA), a generic array logic (generic array logic, GAL), or any combination thereof.

A plurality of computing devices included in the AI compilation apparatus may be distributed in a same region, or may be distributed in different regions. The plurality of computing devices included in the AI compilation apparatus may be distributed in a same AZ, or may be distributed in different AZs. Similarly, the plurality of computing devices included in the AI compilation apparatus may be distributed in a same VPC, or may be distributed in a plurality of VPCs. The plurality of computing devices may be any combination of computing devices such as a server, an ASIC, a PLD, a CPLD, an FPGA, and GAL.

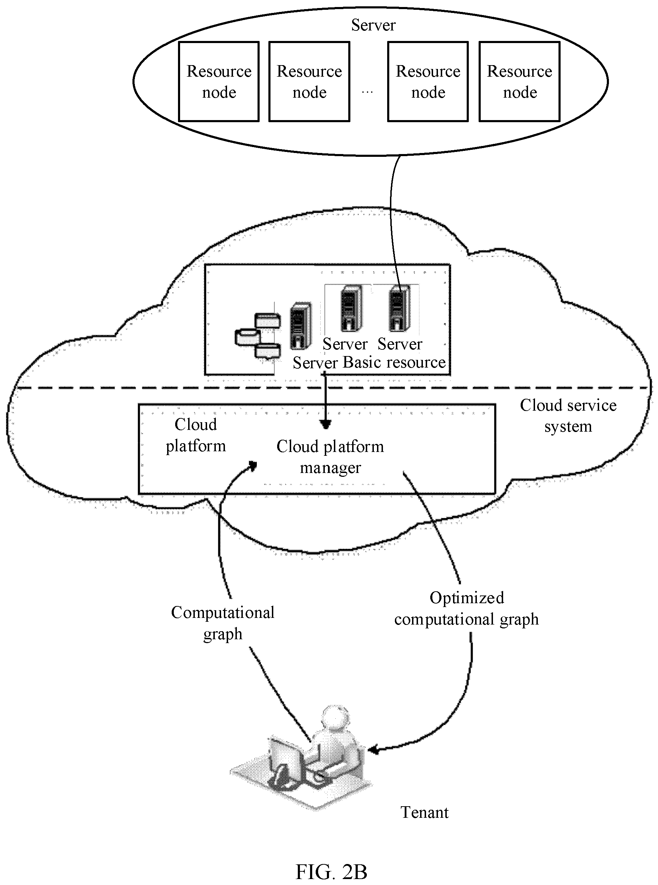

The cloud system provided in this embodiment of this application may be a cloud service system. In the cloud service system, as shown in FIG. 2B, the cloud service system includes a cloud platform and a basic resource. The cloud platform includes a cloud platform manager, and the AI compilation apparatus in FIG. 2A may be a cloud platform manager in FIG. 2B. The basic resource may include a plurality of servers, and each server may include a plurality of resource nodes.

The resource nodes in FIG. 2A and FIG. 2B may be computing device cards or virtual machines (virtual machines, VMs). The computing device card may be at least one of a central processing unit (central processing unit, CPU), a graphics processing unit (graphics processing unit, GPU), and a neural-network processing unit (neural processing unit, NPU).

The cloud platform manager may perform compilation optimization on the computational graph, for example, perform operator fusion.

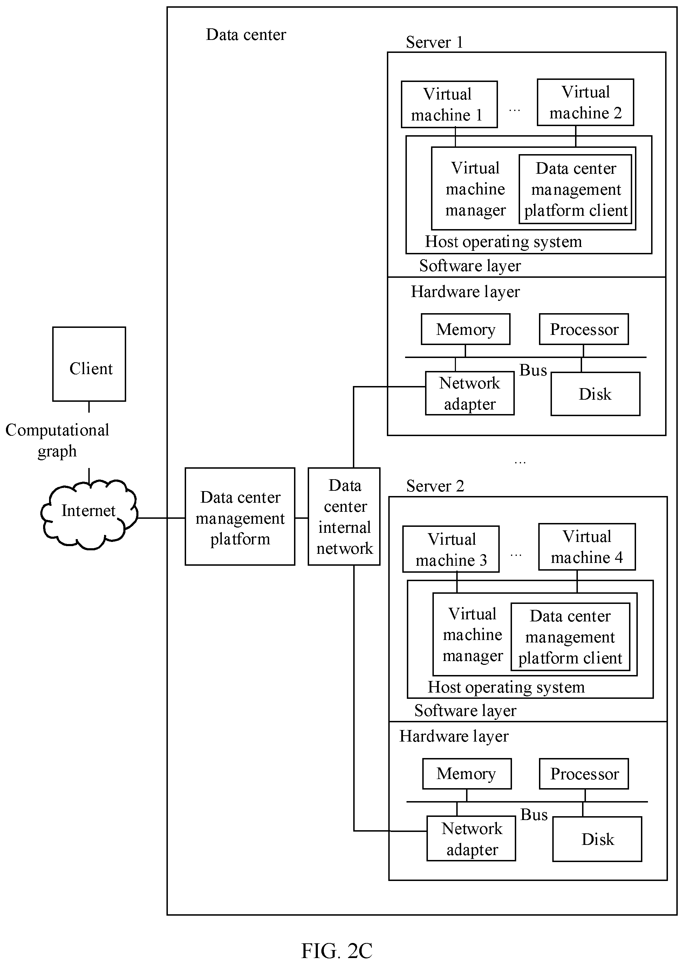

The cloud system provided in this embodiment of this application may be a data center. In the data center, as shown in FIG. 2C, the data center includes a data center management platform, a data center internal network, and a plurality of servers. Each server includes a hardware layer and a software layer. The hardware layer includes a memory, a network adapter, a processor, and a disk. The memory, the network adapter, the processor, and the disk are connected through a bus. The hardware layer provides hardware resources required for running a virtual machine at the software layer. The software layer includes a host machine operating system and a plurality of virtual machines. The host machine operating system may include a data center management platform client, and may interact with the data center management platform.

A virtualization technology mainly includes compute virtualization and input/output (input/output, I/O) virtualization. The virtualization technology shares a physical server with a plurality of tenants at a granularity of virtual machines. This allows the tenants to conveniently and flexibly use physical resources on a premise of security isolation, and can greatly improve utilization of physical resources.

Compute virtualization is to provide computing resources, such as a processor and a memory, of a server for use by a virtual instance. The virtual instance is, for example, a virtual machine. In another scenario, the virtual instance is a container or a bare metal server.

In FIG. 2C, each server obtains a plurality of virtual machines by using a virtualization technology, and each virtual machine may be understood as a resource node. The AI compilation apparatus in FIG. 2A may be the data center management platform in FIG. 2C.

The virtual machine may also be referred to as an elastic compute service (Elastic Compute Service, ECS) or an elastic instance (different cloud service providers have different names).

The data center management platform provides an access interface (for example, an application programming interface (application programming interface, API)). A tenant can operate a client to remotely connect to the access interface to register an account and a password on the data center management platform and log in to the data center management platform. After the data center management platform successfully authenticates the account and the password, the tenant may send information about a computational graph to the data center management platform by using the client, and then the data center management platform may perform optimization based on the computational graph to obtain an optimized computational graph, and may return the optimized computational graph to the tenant.

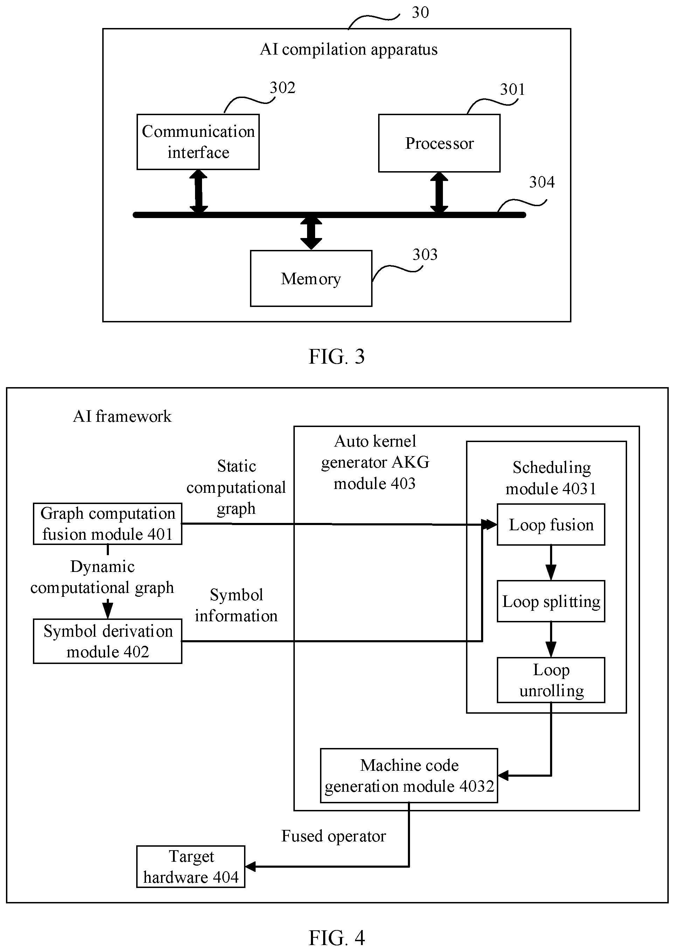

FIG. 3 is a diagram of a possible logical structure of an AI compilation apparatus according to an embodiment of this application. As shown in FIG. 3, the AI compilation apparatus 30 provided in this embodiment of this application includes a processor 301, a communication interface 302, a memory 303, and a bus 304. The processor 301, the communication interface 302, and the memory 303 are connected to each other through the bus 304. In this embodiment of this application, the processor 301 is configured to control and manage actions of the AI compilation apparatus 30. For example, the processor 301 is configured to perform a process of loop fusion to perform operator fusion. The communication interface 302 is configured to support the AI compilation apparatus 30 in performing communication. For example, the communication interface 302 may perform a process of obtaining a computational graph. The memory 303 is configured to store program code and data of the AI compilation apparatus 30.

The processor 301 may be a central processing unit, a general-purpose processor, a digital signal processor, an application-specific integrated circuit, a field-programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the digital signal processor and a microprocessor. The bus 304 may be a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, and the like. For ease of representation, only one thick line is used to represent the bus in FIG. 3, but this does not indicate that there is only one bus or only one type of bus.

The AI compilation apparatus may perform, in various possible AI frameworks, an operator fusion process provided in this embodiment of this application. Refer to FIG. 4. The AI framework may include a graph computation fusion module 401, a symbol derivation module 402, an AKG module 403, and target hardware 404. The AKG module 403 includes a scheduling module 4031 and a machine code generation module 4032. The AI compilation apparatus may include the AKG module 403, or the AI compilation apparatus includes the symbol derivation module 402 and the AKG module 403. Certainly, the AI compilation apparatus may also include the graph computation fusion module 401. Alternatively, the AI compilation apparatus may include the graph computation fusion module 401, the symbol derivation module 402, the AKG module 403, and the target hardware 404.

The graph computation fusion module 401 may divide a large computational graph into a plurality of small computational graphs, and a division basis may be division based on shapes of tensors in the computational graph. For example, a portion including a fixed shape is divided into a static computational graph, and a portion including a dynamic shape (for example, the shape is (1024, ?)) is divided into a dynamic computational graph. Then, the static computational graph is input to the scheduling module 4031 in the AKG module 403. The dynamic computational graph is input to the symbol derivation module 402.

The symbol derivation module 402 may derive a relationship between different dynamic shapes based on semantic information of operators in the dynamic computational graph, and then the symbol derivation module 402 transmits the dynamic computational graph and a relationship (for example, an equal relationship, a multiple relationship, or a size relationship) between dynamic shapes of different tensors to the scheduling module 4031 in the AKG module 403 in a form of symbol information.

A dynamic computational graph is a form of a computational graph in which a shape of a tensor is represented by dynamic variables. In a corresponding static computational graph, a constant is used to represent shape information of a tensor. Symbol derivation derives, based on a computation type in the computational graph, a relationship, for example, an equal relationship, a multiple relationship, or a size relationship, between variables used for shapes of different tensors in the dynamic computational graph.

The scheduling module 4031 is mainly configured to process a loop process of an operator in the computational graph, and may include the following three steps: loop fusion, loop splitting, and loop unrolling. The operator fusion process provided in this embodiment of this application is mainly the step of loop fusion. After loop fusion is completed, loop splitting and loop unrolling are performed. In this way, parallelism and locality of a program may be improved through loop transformation without changing correctness of the program, thereby improving running performance of the program. After the loop process is completed, the scheduling module 4031 transfers processed code to the machine code generation module 4032.

The machine code generation module 4032 may translate code of a fused operator into machine code of the target hardware, and then transfer the machine code to the target hardware 404 for execution.

The target hardware 404 runs the code of the fused operator, to obtain an operation result of the operator.

Based on the AI architecture described above, the following describes the method for operator fusion in a computational graph provided in embodiments of this application. Content related to execution by an AI compilation apparatus in the method may be executed by the AI compilation apparatus, or may be executed by a component (for example, a processor, a chip, or a chip system) of the AI compilation apparatus.

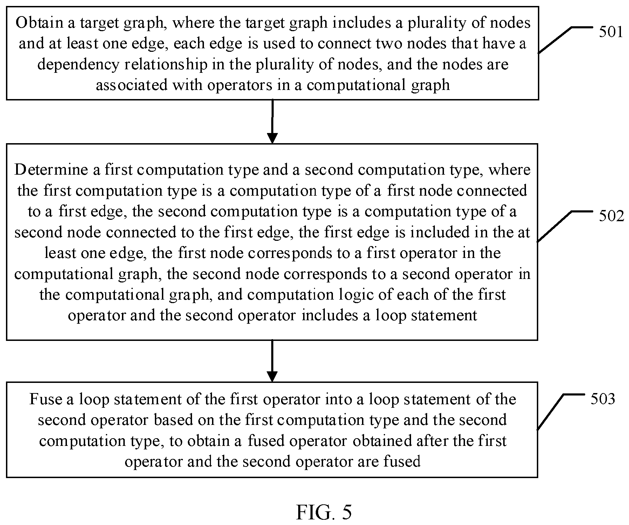

As shown in FIG. 5, an embodiment of the method for operator fusion in a computational graph provided in embodiments of this application includes the following steps:

501. Obtain a target graph, where the target graph includes a plurality of nodes and at least one edge, each edge is used to connect two nodes that have a dependency relationship in the plurality of nodes, and the nodes are associated with operators in the computational graph.

In this application, the target graph may be a computational graph, or may be a dependency graph obtained by performing relationship dependency analysis based on the computational graph. If the target graph is a computational graph, the nodes are operators, and the edge is an edge connecting two operators that have a dependency relationship. If the target graph is a dependency graph, nodes in the dependency graph correspond to the operators in the computational graph, and an edge corresponds to the edge connecting the operators in the computational graph.

502. Determine a first computation type and a second computation type, where the first computation type is a computation type of a first node connected to a first edge, the second computation type is a computation type of a second node connected to the first edge, the first edge is included in the at least one edge, the first node corresponds to a first operator in the computational graph, the second node corresponds to a second operator in the computational graph, and computation logic of each of the first operator and the second operator includes a loop statement.

In this application, there may be a plurality of computation types, for example, an elemwise operation, a broadcast (Broadcast) operation, a reshape (Reshape) operation, a transpose (Transpose) operation, and a reduce operation. For descriptions of these computation types, refer to the foregoing descriptions of the technical terms.

In this application, the first computation type and the second computation type may be the same, or may be different.

503. Fuse a loop statement of the first operator into a loop statement of the second operator based on the first computation type and the second computation type, to obtain a fused operator obtained after the first operator and the second operator are fused.

In this application, the loop statements of the two operators may be directly fused, or may be fused after loop transformation.

In this application, the first computation type and the second computation type may be a same computation type, or may be different computation types. A loop statement in an operator has a loop iteration space. A loop iteration space of the first operator may be the same as or different from a loop iteration space of the second operator. When the loop iteration spaces are the same, the loop statements may be directly fused.

A loop iteration space may be understood as a two-dimensional space, which includes each iteration instance of a loop statement in a loop. If each iteration instance is represented by a point, points of all iteration instances in the entire loop may be constructed as a rectangle. The rectangle may be considered as a polyhedron (Polyhedron) in a two-dimensional space, and this space is referred to as a loop iteration space of computation, as described above in FIG. 1B. If the iteration space of the first operator is the same as that of the second operator, the loop statement of the first operator may be directly fused into the loop statement of the second operator. In this way, code performance of the fused operator may be improved, and efficiency of operator fusion may be improved.

In this embodiment of this application, for two operators that have a dependency relationship, a loop statement of one of the two operators may be fused into a loop fused statement of the other operator based on computation types of the two operators. It is unnecessary to compress all loop statements of the operators into one dimension, to recompute indexes for the operators. Instead, the two operators may be fused based on the computation types of the two operators. In this way, a high-performance fused operator may be obtained.

Optionally, the foregoing step 503 may include: determining at least one loop transformation strategy based on the first computation type and the second computation type; processing the loop statement of the first operator based on the at least one loop transformation strategy, to transform the loop iteration space of the first operator to overlap with the loop iteration space of the second operator; and fusing the loop statement of the first operator into the loop statement of the second operator.

In this application, if the at least one loop transformation strategy is determined based on the first computation type and the second computation type, it indicates that corresponding loop processing needs to be performed on the loop statement of the first operator, so as to transform the loop iteration space of the first operator to overlap with the loop iteration space of the second operator, and then fuse the loop statements. It can be learned that, in the solution of this application, the computation types of the two operators may be used to assist determining of a loop transformation strategy of the first operator, so that the two operators can be fused with high performance.

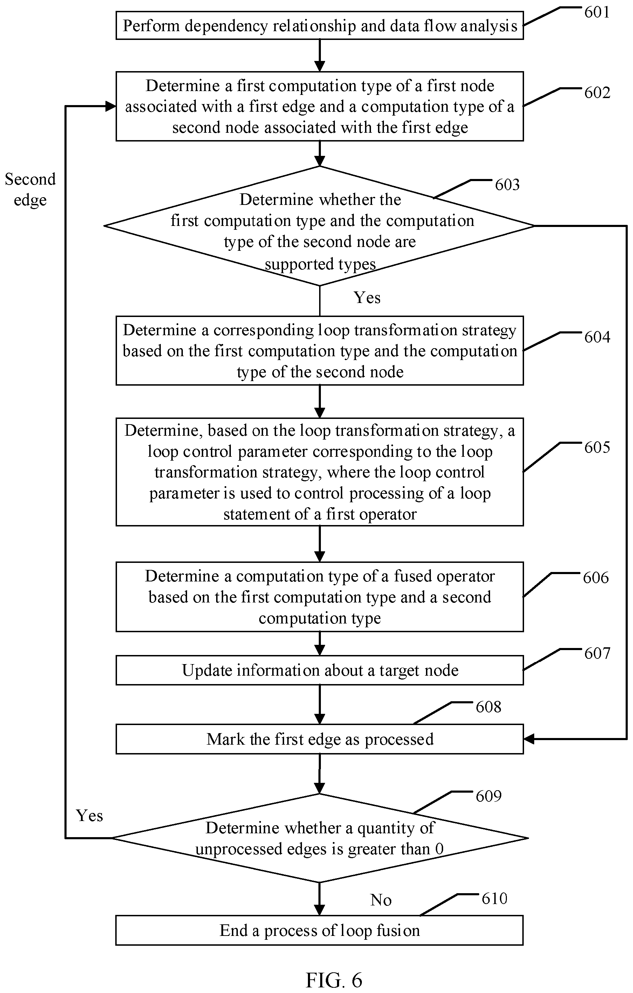

In this embodiment of this application, the computational graph in step 501 may be a static computational graph, or may be a dynamic computational graph. Regardless of the dynamic computational graph or the dynamic computational graph, the following steps shown in FIG. 6 may be performed in the process of operator fusion:

601. Perform dependency relationship and data flow analysis.

In this process, a read operation, a write operation, and a computation operation in the computational graph may be abstracted as nodes, and then the nodes are identified by using node numbers. One of the two nodes that have a dependency relationship may be a source node, and the other may be a target node. The edge between the two nodes is an edge. Each edge may also be represented as a 2-tuple of a number of the source node and a number of the target node. Then, all edges may be topologically sorted, and then the sorted edges are used as an input of loop fusion for subsequent operator fusion processing.

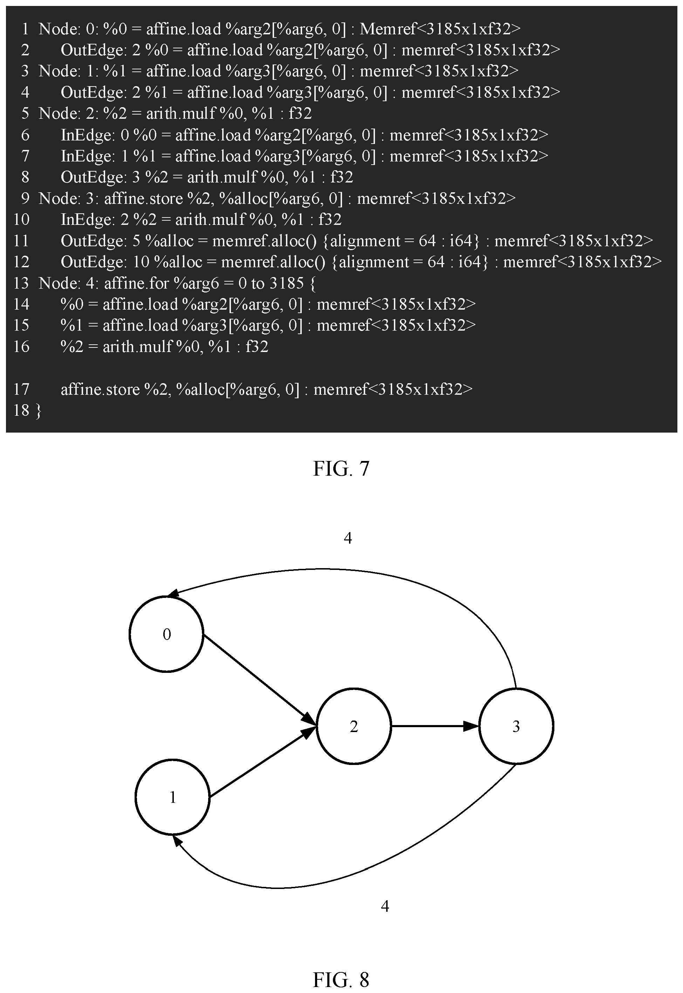

This process may be understood with reference to FIG. 7. FIG. 7 may also be represented in a form of FIG. 8. FIG. 7 includes numbers of nodes, original statements in nodes, node types, and edges. Specifically:

For a number of a node, for example, 0 in "Node: 0: %0 = affine.load %arg2[%arg6, 0] : memref<3185x1xf32>" is the number of the node, and numbers of different nodes are not repeated. There are five nodes in FIG. 7: node 0, node 1, node 2, node 3, and node 4.

For an original statement in a node, for example, "%0 = affine.load %arg2[%arg6, 0] : memref<3185x1xf32>" in the 1st row is the original statement of the node. There are four statement types:
a memory loading statement, for example, affine.load in the 1st row;
a memory storage statement, for example, affine.store in the 17th row;
a computation statement, for example, arith.mulf in line 5; and
a loop statement, for example, affine.for in the 13th row, where original statements included in a loop are in the 14th row to the 17 row, and these statements have been previously assigned node numbers (Node 0 in the 14th row, Node 1 in the 15th row, Node 2 in the 16th row, and Node 3 in the 17th row), which can be obtained by determining whether the original statements in the nodes are equal.

A node type can be obtained based on statement types of the original statements in the nodes, and a type of a memory loading statement and a type of a memory storage statement may be classified as a memory access type; a corresponding computation type may be set for a type of the computation statement by querying Table 1 below; and a type of the loop statement is a loop type.

In this application, possible computation types for a computational graph or a dependency graph and computation types that are subsequently used in this application may be mapped and converted. The mapping relationship may be understood with reference to Table 1.

**Table 1: Computation type mapping table**

| Computation types in the target graph | Computation types used in this application |
|---|---|
| Add, And, Cast, Ceil, Cos, Div, Exp, Greater, Less, Log, Mul, Not, Reciprocal, Relu, Sub, Sqrt, Tanh, | Elemwise |
| Add, Div, Mul, Sub | Broadcast |
| Reshape | Reshape |
| Transpose | Transpose |
| ReduceSum, ReduceMax, ReduceMin | Reduce |

Possible computation types in the target graph may include various possible types listed in a 1st column in Table 1, for example, an addition operation (Add), an And operation (And), a type conversion operation (cast), a floating-point number rounding up operation (Ceil), a cosine operation (Cos), a rounding operation (Div), an exponentiation operation (Exp), an operation of returning a greater value (Greater), an output operation (Less), a logarithm operation (Log), and a multiplication operation (Mul), a negation operation (Not), a reciprocal operation (Reciprocal), an offline correction operation (Relu), a substitution operation (Sub), a square root operation (Sqrt), and a hyperbolic tangent operation (Tanh) in a 2nd row of the 1st column. All these possible computation types may correspond to a computation type Elemwise. An addition operation (Add), a rounding operation (Div), a multiplication operation (Mul), and a substitution operation (Sub) in a 3rd row of the 1st column may correspond to a computation type Broadcast.

In the 2nd row and 3rd row of the 1st column, there is an overlap mapped between an Elemwise type and a Broadcast type because Broadcast is a special case of Elemwise computation. When a network computation type of an overlap type is encountered, a classification standard is to determine shapes of input tensors. If the shapes of the input tensors are all static and equal constants, the shapes of the input tensors are mapped to the Elemwise type. If the shapes of the input tensors include dynamic or static and unequal constants, the shapes of the input tensors are mapped to the Broadcast type.

The computation type of Reshape in a 4th row of the 1st column after mapping is also Reshape, and the computation type of Transpose in a 5th row of the 1st column after mapping is also Transpose. Summation (ReduceSum), maximizing (ReduceMax), and minimizing (ReduceMin) in a 6th row of the 1st column may be mapped to the computation type Reduce.

In FIG. 7, for an edge, for example, "OutEdge: 2" in a 2nd row indicates that there is an edge between Node 0 and Node 2 in a direction from Node 0 to Node 2, which means that Node 2 is a target node, and Node 0 is a source node. Therefore, the edge may be further represented by a 2-tuple of "(source node number, target node number)". That is, in FIG. 8, the edge between Node 0 and Node 2 may be represented by (0, 2). In FIG. 7 and FIG. 8, there are three edges: (0, 1), (1, 2), and (2, 3). Node 4 represents a loop, and a next loop process starts from Node 0 and Node 1.

The three edges may be sorted in a topological order: (0, 1), (1, 2), and (2, 3). The sorted edges are used as an input of loop fusion for subsequent operator fusion processing.

602. Determine the first computation type of the first node associated with the first edge and the computation type of the second node associated with the first edge.

The first edge may be any sorted edge. Generally, the sorted edges are traversed reversely, that is, the processing starts from the last sorted edge.

The first node and the second node that are associated with an edge may be determined based on the edge, and then corresponding computation types may be determined through the foregoing Table 1. The process may be determining a first computation type of a first operator mapped from the first node and a second computation type of a second operator mapped from the second node.

In this embodiment of this application, the first node may be understood as a source node, and the second node may be understood as a target node. Certainly, the first node may alternatively be a target node, and the second node is a source node. This is not limited in this application.

603. Determine whether the first computation type and the computation type of the second node are supported types, and if yes, perform step 604, or if no, perform step 608.

604. Determine a corresponding loop transformation strategy based on the first computation type and the computation type of the second node.

For the loop transformation strategy in this application, refer to Table 2 for understanding.

**Table 2: Loop transformation strategy table**

| Loop transformation strategy | Abbreviation symbol |
|---|---|
| Loop replication | Ⓡ |
| Loop interchange | Ⓟ |
| Loop segmentation | Ⓢ |
| Loop compression | Ⓒ |
| Loop backtracking | Ⓑ |

In this way, in step 604, a combination table of computation types and loop transformation strategies may be looked up to determine that in the combination table, the 1st row includes a plurality of computation types, and the 1st column includes a plurality of computation types, and determine a loop transformation strategy included in an intersection cell between each computation type in the 1st row and each computation type in the 1st column. The combination table may be understood with reference to the following Table 3.

**Table 3: Combination table of computation types and loop transformation strategies**

| Computation types of the first operator and the second operator | Elemwise | Broadcast | Reshape | Transpose | Reduce | Shuffle |
|---|---|---|---|---|---|---|
| Elemwise | [] | [Ⓡ] | [Ⓡ \| Ⓢ \| Ⓒ] | [Ⓟ] | [Ⓟ] | [Ⓑ] |
| Broadcast | [] | [Ⓡ] | [Ⓡ \| Ⓢ \| Ⓒ] | [Ⓟ] | [Ⓟ] | [Ⓑ] |
| Reshape | [] | [] | | [Ⓟ] | [] | [Ⓑ] |
| Transpose | [] | [Ⓡ] | [Ⓒ \| Ⓢ] | | [Ⓟ] | [Ⓑ] |
| Reduce | [Ⓡ] | [Ⓡ] | [Ⓒ \| Ⓢ] | [Ⓟ \| Ⓡ] | [Ⓡ] | [Ⓑ] |
| Shuffle | [Ⓑ] | [Ⓑ] | [Ⓑ] | [Ⓑ] | [Ⓑ] | [Ⓑ] |

In the foregoing combination table, a 1st row represents six computation types of the first operator, a 1st column represents six computation types of the second operator, Ⓡ represents loop replication, Ⓟ represents loop interchange, Ⓢ represents loop segmentation, Ⓒ represents loop compression, Ⓑ represents loop backtracking, [] is an empty set and represents that the loop iteration spaces of the first operator and the second operator overlap, and a blank intersection cell represents that the computation type of the first operator and the computation type of the second operator are not Reshape or Transpose at the same time.

It can be learned from the foregoing Table 3 that, if the first computation type of the first operator is Elemwise, and the second computation type of the second operator is also Elemwise, information in an intersection cell between the first computation type of the first operator and the second computation type of the second operator is [], the [] is an empty set and indicates that loop iteration spaces of the first operator and the second operator overlap, and in this case, the loop statement of the first operator may be directly fused into the loop statement of the second operator.

If the first computation type of the first operator is Reshape, and the second computation type of the second operator is Elemwise, information in the intersection cell between the first computation type of the first operator and the second computation type of the second operator is [Ⓡ | Ⓢ | Ⓒ], loop replication needs to be performed on the first operator first, then loop segmentation is performed, and then loop compression is performed, so that the loop iteration space of the first operator overlaps the loop iteration space of the second operator, and then the loop statement of the first operator is fused into the loop statement of the second operator.

Table 3 further includes a computation type Shuffle, the Shuffle is a combined type, and the Shuffle type is an abstract definition of an ordered list of a series of computation types. A historical type of current computation may be restored by viewing the ordered list stored in the Shuffle type. When either the first computation type of the first operator or the second computation type of the second operator is Shuffle, loop backtracking Ⓑ needs to be performed on the first operator.

Backtracking (Backtracking) is an abstract definition of an ordered list of a series of loop transformations. A historical loop transformation of current computation may be restored by viewing the ordered list stored in a BackTracking loop transformation.

605. Determine, based on the loop transformation strategy, a loop control parameter corresponding to the loop transformation strategy, where the loop control parameter is used to control processing of the loop statement of the first operator.

In this embodiment of this application, a derived loop transformation strategy may be successively applied to a loop nest to which a source node belongs. For example, if determined loop transformation strategies include loop replication, loop interchange, loop compression, and loop segmentation, a loop control parameter, that is, a loop input parameter, corresponding to each loop transformation strategy may be determined first. Loop input parameters of different loop transformation strategies are different, and are described in the following separately.

Input parameters of the loop replication include: a quantity of replicated loops, an insertion position of a loop, an upper bound of a replicated loop (that is, a start position of the loop), a lower bound of the replicated loop (that is, an end position of the loop), and a step of the replicated loop (which may be 1).

Loop input parameters of the loop interchange include: positions of two loops that need to be exchanged.

Loop input parameters of the loop compression include: positions of loops that need to be compressed.

Loop input parameters of the loop segmentation include: a position of a loop that needs to be segmented, a quantity of times of segmentation, and an upper bound, a lower bound, and a step of a loop of each segment after segmentation.

In this embodiment of this application, a manner of determining a loop input parameter of a loop transformation strategy based on a node type is as follows:

Loop replication: Check a loop nest at which a loop variable for a source node of an edge to access a tensor is located and a loop nest at which a loop variable for a target node of the edge to access the tensor is located, and obtain a difference set between the two loop nests. A size of the difference set is a quantity of loops that need to be replicated, a position of the difference set is an insertion position of a loop, and an upper bound, a lower bound, and a step of a loop of the difference set are an upper bound, a lower bound, and a step of a replicated loop.

Loop interchange: Based on semantic information of a transpose operator, an axis to be exchanged for transpose is positions of two loops to be exchanged; based on semantic information of a reduce operator, when a loop at which a reduce axis is located is at an outer layer of a non-reduce axis, positions of the reduce axis and the non-reduce axis are exchanged until the loop at which the reduce axis is located is at the innermost layer of a loop nest; and if there is multidimensional reduce, dimensions of the reduce are sorted and exchanged based on dimensions of a tensor read by reduce computation.

Loop compression: Based on semantic information of a reshape operator, a difference set between loops corresponding to dimensions of a tensor read for the reshape operator and dimensions of a tensor written for the reshape operator is a position of a loop to be compressed.

Loop segmentation: Based on the semantic information of the reshape operator, the difference set between the loops corresponding to the dimensions of the tensor read for the reshape operator and the dimensions of the tensor written for the reshape operator is a position of a loop to be segmented, a quantity of times of segmentation is a size of the difference set, and an upper bound, a lower bound, and a step of a loop of each segment after segmentation are a loop to write the dimensions of the tensor for the reshape operator.

606. Determine a computation type of the fused operator based on the first computation type and the second computation type.

In this step, a computation type derivation table may be used to determine that in the computation type derivation table, the 1st row includes a plurality of computation types, and the 1st column includes a plurality of computation types, and determine at least one computation type included in an intersection cell between each computation type in the 1st row and each computation type in the 1st column, where the at least one computation type is the computation type of the fused operator. The computation type derivation table may be understood with reference to Table 4.

**Table 4: Computation type derivation table**

| Computation types of the first operator and the second operator | Elemwise | Broadcast | Reshape | Transpose | Reduce | Shuffle |
|---|---|---|---|---|---|---|
| Elemwise | Elemwise | Broadcast | [Broadcast \| Reshape \| Elemwise] | Transpose | Reduce | Shuffle |
| Broadcast | Broadcast | Broadcast | [Broadcast \| Reshape \| Elemwise] | Transpose | Reduce | Shuffle |
| Reshape | Reshape | Reshape | Reshape | Shuffle | Reduce | Shuffle |
| Transpose | Transpose | Transpose | Shuffle | Transpose | Reduce | Shuffle |
| Reduce | Reduce | Reduce | Reduce | Reduce | Reduce | Shuffle |
| Shuffle | Shuffle | Shuffle | [Shuffle \| Transpose] | [Shuffle \| Reshape] | Reduce | [Shuffle \| Reshape \| Transpose \| Elemwise] |

In the foregoing computation type derivation table, a 1st row represents the six computation types of the first operator, a 1st column represents the six computation types of the second operator, and a computation type at an intersection cell is the computation type of the fused operator.

It can be learned from Table 4 that the computation type of the fused operator may be quickly determined based on the first computation type and the second computation type by looking up the table. This helps further optimize the fused operator.

607. Update information about the target node.

In this embodiment of this application, if a loop of the source node is fused into the target node, the information about the target node needs to be updated, so that a next loop process can be correctly performed. A process of updating the information about the target node may include:

A current computation type of the target node is updated to the computation type of the fused operator. A computation type of the source node is added to a historical fusion computation type list of the target node, the loop transformation strategy used for the source node in step 605 is added to a loop transformation strategy list used by the source node, a source node number is added to a historical fused node number list of the target node, and all edges that use the source node as the target node are set to the fused operator as the target node.

In addition, if the computation type of the source node or the target node is Shuffle, the computation type of the fused node (the target node) needs to be added to the Shuffle type, and is stored at the end in an ordered list of the Shuffle type. In addition, an updated loop transformation type of the target node is added to a BackTracking type, and is stored at the end in an ordered list of the BackTracking type.

When the type of the target node is the Shuffle type, the ordered list stored in the Shuffle type is traversed from the beginning to the end, a traversed computation type is used as a target node type, and the traversed computation type and a source node type form a 2-tuple, and the 2-tuple is added to the historical fusion computation type list. After the traversal is completed, these computation types are deleted from the ordered list of the Shuffle type.

When the loop transformation strategy is the BackTracking type, the ordered list stored in the BackTracking type is traversed from the beginning to the end, a traversed loop transformation strategy is added to a loop transformation combination list used by the source node, and after that, the loop transformation is deleted from the ordered list of the BackTracking type.

608. Mark the first edge as processed.

609. Determine whether a quantity of unprocessed edges is greater than 0, if yes, select a second edge, and perform step 602, or if no, perform step 610.

A process of performing loop fusion on two nodes associated with the second edge may start from step 602, but the first edge is replaced with the second edge.

610. End a process of loop fusion.

After the process of loop fusion ends, loop splitting and a subsequent process may be performed with reference to FIG. 4.

It can be learned from the embodiment described in FIG. 6 that, in the solution provided in embodiments of this application, a high-performance fused operator may be obtained by performing loop fusion on two nodes associated with an edge. In addition, the foregoing process of loop fusion may be performed for a plurality of times, thereby further improving performance of the operator and well optimizing the computational graph.

Because the operator fusion solution provided in embodiments of this application may be applicable to a static computational graph and a dynamic computational graph, it can be learned from the description in FIG. 4 that loop fusion of a dynamic shape and implicit broadcast may be supported through symbol derivation.

In this embodiment of this application, symbol derivation may be performed on the dynamic computational graph, to determine a relationship between a first variable and a second variable in the dynamic computational graph, where the relationship between the first variable and the second variable indicates a loop fusion strategy or indicates a relationship between input data and output data of an operator of a different computation type, the first variable is a variable used to describe a shape of a first tensor, the second variable is a variable used to describe a shape of a second tensor, and the first tensor and the second tensor are different tensors in the dynamic computational graph.

Relationships between dynamic dimensions of upper bounds and lower bounds of different loops can be obtained through symbol derivation. In this way, a dynamic shape or static shape scenario does not need to be distinguished. A specific process of symbol derivation may be as follows:

Step (1): Establish shape constraints by using a symbol derivation result and data flow analysis.

In this step, the symbol derivation result is to assign a unique identifier to each piece of unknown shape information. A result of data flow analysis is a size relationship between different computations and data storage. Therefore, the following types of constraint information may be obtained based on these analysis results:

### 1.1. Equal:

Elemwise type: For a computation (for example, of a square root (Sqrt)) that does not change input and output shapes, it can be learned that a shape of input data is equal to that of output data. Therefore, it may be identified that an input symbol is equal to an output symbol.

Transpose type: It may be learned based on transpose computation semantics that shape sizes are not changed, but are rearranged. That is, [shape1, shape2] is changed to [shape2, shape1] after transpose. Therefore, it may be identified, after transpose, that a first dimension of output dimensions as equal to a second dimension of an input shape, and a second dimension of the output dimensions is equal to a first dimension of the input shape.

1.2. Greater than/Less than: For example, for an implicit broadcast computation, according to the foregoing description, an output shape of the computation is greater than or equal to an input shape. Therefore, it may be identified that an output shape symbol A is greater than or equal to an input shape symbol B.

Step (2): Perform loop fusion based on symbol information.

Loop fusion is performed for each of the three cases in step (1).

2.1. Equal: Loops in which two equal symbols are located are fused, and may be directly fused. For example:

```
         for i1
               for j1
                    A[i1][j1]=B[i1][j1]*B[i1][j1]
               for j2
                    for i2
                          C[j2][i2]=A[i2][j2]
```

The foregoing is an example of transpose. Symbols i1 and i2 are equal, and j1 and j2 are equal. The loops may be directly fused, and indexes i2 and j2 are uniformly used.

```
               for j2
                    for i2
                          A[i2][j2]=B[i2][j2]*B[i2][j2]
         C[j2][i2]=A[i2][j2]
```

2.2. Greater than/Less than: Loops in which two symbols with a size relationship are located are fused, and a statement in a loop with a smaller symbol may be fused into a loop with a larger symbol, for example:

```
         for i
                    A[i]=B[i]*B[i]
               for j
                    C[j]=A[j]+D[j]
```

The foregoing is an example of implicit broadcast. When a symbol j is greater than or equal to i, a loop i is fused into a loop j, and a bound check statement is added before an index. Because this scenario occurs only during broadcast computation, a symbol i may be either equal to j or equal to 1 according to a semantic description of broadcast. Therefore, j or 0 is used for indexing.

```
         for j
               if i==j:
                    A[j]=B[j]*B[j]
         C[j]=A[j]+D[j]
               else:
                    A[0]=B[0]*B[0]
         C[j]=A[0]+D[j]
```

It can be learned from the foregoing description that the solution provided in embodiments of this application supports loop fusion of dynamic shape operators, and supports fusion of implicit broadcast through the case 2.2 in step (2), where a condition branch of i==j is non-broadcast fusion code, and a condition branch of else is a broadcast fusion code.

In addition, the source node in the computational graph may correspond to a plurality of target nodes. In this case, multi-output edge processing may be performed on the source node. A process of the processing may be: determining the second node with the highest priority in the plurality of target nodes; and performing dependency inversion on the source node and a target node other than the second node in the plurality of target nodes, so that the first node becomes a target node in a dependency relationship with the target node other than the second node. That is, when there are a plurality of target nodes, a unique target node may be determined for the source node through dependency inversion, thereby implementing efficient fusion of operators.

A process of dependency inversion may include the following steps:
Step (1): Perform priority-based sorting on a plurality of target nodes of a multi-output edge, and the sorting is as follows:
The sorting may be performed based on computation types: Different computation priorities in a descending order are as follows: [Shuffle, Reduce, Transpose, Reshape, Broadcast, Elemwise].

When the computation types are equal, the sorting is performed based on node numbers in a descending order. The sorting ends because the node number is unique.

Step (2): Based on a sorting result in step (1), retain a node with the highest priority as a target node, and perform dependency inversion on the other nodes: exchanging a source node and a target node of the edge, for example:
If there are edges [(S, D1), (S, D2), (S, D3)] between a source node S and target nodes [D1, D2, D3] (sorted by priority), the edge between S and D1 remains unchanged, the edges of the remaining nodes are reversed, and final edges are [(S, D1), (D2, S), (D3, S)].

After dependency inversion, a process of performing operator fusion based on edges described in the embodiment corresponding to FIG. 6 is performed.

The foregoing describes the method for operator fusion in a computational graph. The following describes, with reference to an accompanying drawing, a computer apparatus according to an embodiment of this application.

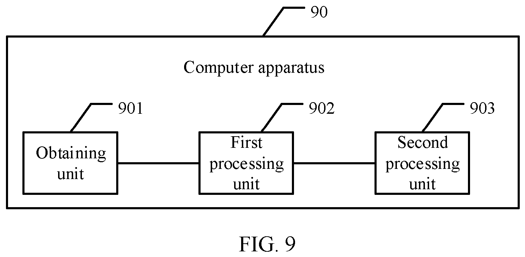

As shown in FIG. 9, a structure of the computer apparatus 90 according to an embodiment of this application includes:
an obtaining unit 901, configured to obtain a target graph, where the target graph includes a plurality of nodes and at least one edge, each edge is used to connect two nodes that have a dependency relationship in the plurality of nodes, and the nodes are associated with operators in the computational graph;
a first processing unit 902, configured to determine a first computation type and a second computation type, where the first computation type is a computation type of a first node connected to a first edge, the second computation type is a computation type of a second node connected to the first edge, the first edge is included in the at least one edge, the first node corresponds to a first operator in the computational graph, the second node corresponds to a second operator in the computational graph, and computation logic of each of the first operator and the second operator includes a loop statement; and
a second processing unit 903, configured to fuse a loop statement of the first operator into a loop statement of the second operator based on the first computation type and the second computation type, to obtain a fused operator obtained after the first operator and the second operator are fused.

According to the computer apparatus provided in this embodiment of this application, for two operators that have a dependency relationship, a loop statement of one of the two operators may be fused into a loop fused statement of the other operator based on computation types of the two operators. It is unnecessary to compress all loop statements of the operators into one dimension, to recompute indexes for the operators. Instead, the two operators may be fused based on the computation types of the two operators. In this way, a high-performance fused operator may be obtained.

Optionally, if it is determined, by looking up a combination table based on the first computation type and the second computation type, that a loop iteration space of the first operator overlaps with a loop iteration space of the second operator, the loop statement of the first operator may be directly fused into the loop statement of the second operator.

Optionally, the second processing unit 903 is specifically configured to: determine at least one loop transformation strategy based on the first computation type and the second computation type; process the loop statement of the first operator based on the at least one loop transformation strategy, to transform the loop iteration space of the first operator to overlap with the loop iteration space of the second operator; and fuse the loop statement of the first operator into the loop statement of the second operator.

Optionally, the at least one loop transformation strategy is obtained by looking up a combination table based on the first computation type and the second computation type, and the combination table includes a correspondence between a combination of the first computation type and the second computation type and the at least one loop transformation strategy.

Optionally, the combination table is as follows:

| Computation types of the first operator and the second operator | Elemwise | Broadcast | Reshape | Transpose | Reduce | Shuffle |
|---|---|---|---|---|---|---|
| Elemwise | [] | [Ⓡ] | [Ⓡ \| Ⓢ \| Ⓒ] | [Ⓟ] | [Ⓟ] | [Ⓑ] |
| Broadcast | [] | [Ⓡ] | [Ⓡ \| Ⓢ \| Ⓒ] | [Ⓟ] | [Ⓟ] | [Ⓑ] |
| Reshape | [] | [] | | [Ⓟ] | [] | [Ⓑ] |
| Transpose | [] | [Ⓡ] | [Ⓒ \| Ⓢ] | | [Ⓟ] | [Ⓑ] |
| Reduce | [Ⓡ] | [Ⓡ] | [Ⓒ \| Ⓢ] | [Ⓟ \| Ⓡ] | [Ⓡ] | [Ⓑ] |
| Shuffle | [Ⓑ] | [Ⓑ] | [Ⓑ] | [Ⓑ] | [Ⓑ] | [Ⓑ] |

In the foregoing combination table, a 1st row represents six computation types of the first operator, a 1st column represents six computation types of the second operator, Ⓡ represents loop replication, Ⓟ represents loop interchange, Ⓢ represents loop segmentation, Ⓒ represents loop compression, Ⓑ represents loop backtracking, [] is an empty set and represents that the loop iteration spaces of the first operator and the second operator overlap, and a blank intersection cell represents that the computation type of the first operator and the computation type of the second operator are not Reshape or Transpose at the same time.

Optionally, the second processing unit 903 is further configured to determine a computation type of the fused operator based on the first computation type and the second computation type.

Optionally, the computation type of the fused operator is obtained by looking up a computation type derivation table based on the first computation type and the second computation type, and the computation type derivation table includes a correspondence between the combination of the first computation type and the second computation type and the computation type of the fused operator.

Optionally, the computation type derivation table is as follows:

| Computation types of the first operator and the second operator | Elemwise | Broadcast | Reshape | Transpose | Reduce | Shuffle |
|---|---|---|---|---|---|---|
| Elemwise | Elemwise | Broadcast | [Broadcast \| Reshape \| Elemwise] | Transpose | Reduce | Shuffle |
| Broadcast | Broadcast | Broadcast | [Broadcast \| Reshape \| Elemwise] | Transpose | Reduce | Shuffle |
| Reshape | Reshape | Reshape | Reshape | Shuffle | Reduce | Shuffle |
| Transpose | Transpose | Transpose | Shuffle | Transpose | Reduce | Shuffle |
| Reduce | Reduce | Reduce | Reduce | Reduce | Reduce | Shuffle |
| Shuffle | Shuffle | Shuffle | [Shuffle \| Transpose] | [Shuffle \| Reshape] | Reduce | [Shuffle \| Reshape \| Transpose \| Elemwise] |

In the foregoing computation type derivation table, a 1st row represents the six computation types of the first operator, a 1st column represents the six computation types of the second operator, and a computation type at an intersection cell is the computation type of the fused operator.

Optionally, the computational graph is a dynamic computational graph or a static computational graph, a shape of a tensor in the dynamic computational graph is described by using a variable, and a shape of a tensor in the static computational graph is described by using a constant.

Optionally, the first processing unit 902 is further configured to perform symbol derivation on the dynamic computational graph, to determine a relationship between a first variable and a second variable in the dynamic computational graph, where the relationship between the first variable and the second variable indicates a loop fusion strategy or indicates a relationship between input data and output data of an operator of a different computation type, the first variable is a variable used to describe a shape of a first tensor, the second variable is a variable used to describe a shape of a second tensor, and the first tensor and the second tensor are different tensors in the dynamic computational graph.

Optionally, when the first node is used as a source node, and there are a plurality of corresponding target nodes, the first processing unit 902 is further configured to: determine the second node with the highest priority in the plurality of target nodes; and perform dependency inversion on the source node and a target node other than the second node in the plurality of target nodes, so that the first node becomes a target node in a dependency relationship with the target node other than the second node.

Optionally, the second processing unit 903 is further configured to: determine, based on a loop transformation strategy, a loop control parameter corresponding to the loop transformation strategy, where the loop control parameter is used to control processing of the loop statement of the first operator.

Optionally, the second processing unit 903 is further configured to update information about the second operator to information about the fused operator, where the information about the fused operator includes the computation type of the fused operator.

Optionally, the second processing unit 903 is further configured to: when there are a plurality of edges, perform loop fusion on two nodes associated with a second edge.

Optionally, the target graph is the computational graph, the first node is the first operator, the second node is the second operator, and the first edge is an edge used to connect the first operator and the second operator.

Optionally, the target graph is a dependency graph obtained by performing dependency relationship analysis on the computational graph.

Functions of various units of the computer apparatus 90 described above may be understood with reference to the descriptions in the foregoing method embodiments, and details are not described herein again.

The computer apparatus or computer device provided in this embodiment of this application may alternatively be the AI compilation apparatus described in FIG. 3.

In another embodiment of this application, a computer-readable storage medium is further provided. The computer-readable storage medium stores computer-executable instructions. When a processor of a computer apparatus executes the computer-executable instructions, the computer apparatus performs the steps performed by the computer apparatus in FIG. 5 to FIG. 8.

In another embodiment of this application, a computer program product is further provided. The computer program product includes computer program code. When the computer program code is executed on a computer, a computer device performs the steps performed by the computer apparatus in FIG. 5 to FIG. 8.

In another embodiment of this application, a chip system is further provided. The chip system includes one or more interface circuits and one or more processors. The interface circuit and the processor are interconnected through a line. The interface circuit is configured to receive a signal from a memory of a computer apparatus, and send a signal to the processor, where the signal includes computer instructions stored in the memory. When the processor executes the computer instructions, the computer apparatus performs the steps performed by the computer apparatus in FIG. 5 to FIG. 8. In a possible design, the chip system may further include a memory. The memory is configured to store program instructions and data that are necessary for a control device. The chip system may include a chip, or may include a chip and another discrete component.

In the several embodiments provided in this application, it should be understood that the disclosed system, apparatus, and method may be implemented in other manners. For example, the apparatus embodiments described above are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. All or some of the integrated units may be implemented by software, hardware, firmware, or any combination thereof.

When software is used to implement the integrated units, all or some of the integrated units may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

## Claims

1. A method for operator fusion in a computational graph, comprising:
obtaining a target graph, wherein the target graph comprises a plurality of nodes and at least one edge, each edge is used to connect two nodes that have a dependency relationship in the plurality of nodes, and the nodes are associated with operators in the computational graph;
determining a first computation type and a second computation type, wherein the first computation type is a computation type of a first node connected to a first edge, the second computation type is a computation type of a second node connected to the first edge, the first edge is comprised in the at least one edge, the first node corresponds to a first operator in the computational graph, the second node corresponds to a second operator in the computational graph, and computation logic of each of the first operator and the second operator comprises a loop statement; and
fusing a loop statement of the first operator into a loop statement of the second operator based on the first computation type and the second computation type, to obtain a fused operator obtained after the first operator and the second operator are fused.

2. The method according to claim 1, wherein the fusing the loop statement of the first operator into the loop statement of the second operator based on the first computation type and the second computation type comprises:
determining at least one loop transformation strategy based on the first computation type and the second computation type;
processing the loop statement of the first operator based on the at least one loop transformation strategy, to transform a loop iteration space of the first operator to overlap with a loop iteration space of the second operator; and
fusing the loop statement of the first operator into the loop statement of the second operator.

3. The method according to claim 2, wherein the at least one loop transformation strategy is obtained by looking up a combination table based on the first computation type and the second computation type, and the combination table comprises a correspondence between a combination of the first computation type and the second computation type and the at least one loop transformation strategy.

4. The method according to claim 3, wherein the combination table is:
| Computation types of the first operator and the second operator | Elemwise | Broadcast | Reshape | Transpose | Reduce | Shuffle |
|---|---|---|---|---|---|---|
| Elemwise | [] | [Ⓡ] | [Ⓡ \| Ⓢ \| Ⓒ] | [Ⓟ] | [Ⓟ] | [Ⓑ] |
| Broadcast | [] | [Ⓡ] | [Ⓡ \| Ⓢ \| Ⓒ] | [Ⓟ] | [Ⓟ] | [Ⓑ] |
| Reshape | [] | [] | | [Ⓟ] | [] | [Ⓑ] |
| Transpose | [] | [Ⓡ] | [Ⓒ \| Ⓢ | | [Ⓟ] | [Ⓑ] |
| Reduce | [Ⓡ] | [Ⓡ] | [Ⓒ \| Ⓢ] | [Ⓟ \| Ⓡ] | [Ⓡ] | [Ⓑ] |
| Shuffle | [Ⓑ] | [Ⓑ] | [Ⓑ] | [Ⓑ] | [Ⓑ] | [Ⓑ] |
wherein a 1st row represents six computation types of the first operator, a 1st column represents six computation types of the second operator, Ⓡ represents loop replication, Ⓟ represents loop interchange, Ⓢ represents loop segmentation, Ⓒ represents loop compression, Ⓑ represents loop backtracking, [] is an empty set and represents that the loop iteration spaces of the first operator and the second operator overlap, and a blank intersection cell represents that the computation type of the first operator and the computation type of the second operator are not Reshape or Transpose at the same time.

5. The method according to any one of claims 1 to 4, wherein the method further comprises:
determining a computation type of the fused operator based on the first computation type and the second computation type.

6. The method according to claim 5, wherein the computation type of the fused operator is obtained by looking up a computation type derivation table based on the first computation type and the second computation type, and the computation type derivation table comprises a correspondence between the combination of the first computation type and the second computation type and the computation type of the fused operator.

7. The method according to claim 6, wherein the computation type derivation table is:
| Computation types of the first operator and the second operator | Elemwise | Broadcast | Reshape | Transpose | Reduce | Shuffle |
|---|---|---|---|---|---|---|
| Elemwise | Elemwise | Broadcast | [Broadcast \| Reshape \| Elemwise] | Transpose | Reduce | Shuffle |
| Broadcast | Broadcast | Broadcast | [Broadcast \| Reshape \| Elemwise] | Transpose | Reduce | Shuffle |
| Reshape | Reshape | Reshape | Reshape | Shuffle | Reduce | Shuffle |
| Transpose | Transpose | Transpose | Shuffle | Transpose | Reduce | Shuffle |
| Reduce | Reduce | Reduce | Reduce | Reduce | Reduce | Shuffle |
| Shuffle | Shuffle | Shuffle | [Shuffle \| Transpose] | [Shuffle \| Reshape] | Reduce | [Shuffle \| Reshape \| Transpose \| Elemwise] |
wherein a 1st row represents the six computation types of the first operator, a 1st column represents the six computation types of the second operator, and a computation type at an intersection cell is the computation type of the fused operator.

8. The method according to any one of claims 1 to 7, wherein the computational graph is a dynamic computational graph or a static computational graph, a shape of a tensor in the dynamic computational graph is described by using a variable, and a shape of a tensor in the static computational graph is described by using a constant.

9. The method according to claim 8, wherein the computational graph is a dynamic computational graph, and the method further comprises:
performing symbol derivation on the dynamic computational graph, to determine a relationship between a first variable and a second variable in the dynamic computational graph, wherein the relationship between the first variable and the second variable indicates a loop fusion strategy or indicates a relationship between input data and output data of an operator of a different computation type, the first variable is a variable used to describe a shape of a first tensor, the second variable is a variable used to describe a shape of a second tensor, and the first tensor and the second tensor are different tensors in the dynamic computational graph.

10. The method according to claim 9, wherein the method is applied to an implicit broadcast scenario.

11. The method according to any one of claims 1 to 10, wherein when the first node is used as a source node, and there are a plurality of corresponding target nodes, the method further comprises:
determining the second node with the highest priority in the plurality of target nodes; and
performing dependency inversion on the source node and a target node other than the second node in the plurality of target nodes, so that the first node becomes a target node in a dependency relationship with the target node other than the second node.

12. The method according to any one of claims 2 to 4, wherein the method further comprises:
determining, based on a loop transformation strategy, a loop control parameter corresponding to the loop transformation strategy, wherein the loop control parameter is used to control processing of the loop statement of the first operator.

13. The method according to any one of claims 5 to 7, wherein the method further comprises:
updating information about the second operator to information about the fused operator, wherein the information about the fused operator comprises the computation type of the fused operator.

14. The method according to claim 13, wherein when there are a plurality of such edges, the method further comprises:
performing loop fusion on two nodes associated with a second edge.

15. The method according to any one of claims 1 to 14, wherein the target graph is the computational graph, the first node is the first operator, the second node is the second operator, and the first edge is an edge used to connect the first operator and the second operator.

16. The method according to any one of claims 1 to 14, wherein the target graph is a dependency graph obtained by performing dependency relationship analysis on the computational graph.

17. A computer apparatus, comprising:
an obtaining unit, configured to obtain a target graph, wherein the target graph comprises a plurality of nodes and at least one edge, each edge is used to connect two nodes that have a dependency relationship in the plurality of nodes, and the nodes are associated with operators in the computational graph;
a first processing unit, configured to determine a first computation type and a second computation type, wherein the first computation type is a computation type of a first node connected to a first edge, the second computation type is a computation type of a second node connected to the first edge, the first edge is comprised in the at least one edge, the first node corresponds to a first operator in the computational graph, the second node corresponds to a second operator in the computational graph, and computation logic of each of the first operator and the second operator comprises a loop statement; and
a second processing unit, configured to fuse a loop statement of the first operator into a loop statement of the second operator based on the first computation type and the second computation type, to obtain a fused operator obtained after the first operator and the second operator are fused.

18. A computing device, comprising a processor and a computer-readable storage medium storing a computer program, wherein
the processor is coupled to the computer-readable storage medium, and when the computer program is executed by the processor, the method according to any one of claims 1 to 16 is implemented.

19. A computer-readable storage medium, wherein the computer-readable storage medium stores a computer program, and when the computer program is executed by a processor, the method according to any one of claims 1 to 16 is implemented.

20. A computer program product, wherein the computer program product comprises computer program code, and when the computer program code is run on a computer device, the computer device is enabled to perform the method according to any one of claims 1 to 16.

21. A chip system, comprising a processor, wherein the processor is invoked to perform the method according to any one of claims 1 to 16.
